# EUROPÄISCHE PATENTANMELDUNG

(11) **EP 0 692 354 A2**
(43) Veröffentlichungstag der Anmeldung: **17.01.1996**
(21) Anmeldenummer: 95108964.8
(22) Anmeldetag: 10.06.1995
(51) Int. Cl.: B29B 9/06, B29C 47/30

(54) **Verfahren zur Herstellung einer Düsenplatte mit zwischen Grundkörper und Schneidkörper eingelagerter Zwischenschicht**

(30) Priorität: 15.07.1994 DE 4425004
(71) Anmelder: Werner & Pfleiderer GmbH, D-70469 Stuttgart (DE)
(72) Erfinder: Schneider, Friedrich, Ing. (grad.), D-71278 Weissach (DE); Wörz, Wolfgang, Dipl.-Ing. (FH), D-75428 Illingen (DE)

(57) **Zusammenfassung**

Nach einem Verfahren zur Herstellung einer Düsenplatte mit zwischen einem Grundkörper (2) und einer ringförmigen Schneidplatte (12) eingelagerter Zwischenschicht (13) im Bereich der Düsen (6) zur Granulierung thermoplastischer Kunststoffe unter Wasser besteht zum Dehnungsausgleich von Wärmespannungen die zumindest eine Zwischenschicht (13) aus einem nickelhaltigen Metallpulvergemisch mit einer Schichtdicke von 0,5 bis 2 mm, wobei die Zwischenschicht (13) unter Anwendung der heißisostatischen Preßtechnik verdichtet und durch Diffusionsschweißen mit dem Grundkörper (2) und der vollflächig aus einer Kunststoff-Legierung gebildeten, vor Verschleiß geschützten Schneidplatte (12) verbunden wird.

## Beschreibung

Die Erfindung betrifft ein Verfahren zur Herstellung einer Düsenplatte mit zwischen einem Grundkörper und einer ringförmigen Schneidplatte eingelagerter Zwischenschicht im Bereich der Düsen zur Granulierung thermoplastischer Kunststoffe unter Wasser.

Die Granulierung thermoplastischer Kunststoffe unter Wasser erfolgt durch Schneiden der aus Düsenbohrungen der Düsenplatte austretenden Kunststoffstränge mit unter Anpreßdruck die Schneidfläche abstreifenden Schneidmessern. Daher sind für die Schneidfläche der Düsenplatte metallische Werkstoffe mit einem Karbidvolumen > 50 % mit einer Karbidgröße < 10 µ erforderlich. Nachteilig bei diesen Hartstoff-Legierungen gegenüber Legierungen auf Eisenbasis mit z.B. martensitischem Gefüge ist ihr geringer Wärmeausdehnungskoeffizient. Die hierbei zwischen den Grenzflächen der Werkstoffe auftretenden Spannungen führen zu Spannungsrissen in den Werkstoffen und damit zu Granulat minderer Qualität und vorzeitigem Ausfall des Werkstoffes.

Bei einer aus der US PS 32 71 822 bekannten Ausführung sind in einer Senkung der Düsenplatte Formstücke aus gesintertem Wolframkarbid angebracht. Sie sind durch dünne Metallstreifen aus Silber und Kupfer untereinander sowie von der Düsenplatte getrennt und werden unter Vakuum hart gelötet, so daß die Spalten zwischen den Formstücken aufgefüllt sind.

Diese Einlagerung einzelner Formstücke in der Düsenplatte ist wegen des Verschleißes der mit Silberlot gefüllten und als Dehnfuge wirksamen Spalte nicht dauerhaft, da nach einiger Zeit Auswaschungen in den Dehnfugen auftreten, die den Schneidvorgang der Kunststoffstränge erheblich beeinträchtigen. Dies führt zu ungleichem und verbranntem Granulat beim Abschlag von der Schneidplatte.

Bei einer weiteren aus der US PS 35 99 286 bekannten Düsenplatte ist die Schneidfläche in einer Aufschichtung aus mehreren Keramikschichten und dazwischen gelagerten, durch Flammspritzen mit diesen verbundenen dünnen Metallstreifen bestückt, welche die Düsenbohrungen einschließen und in diesem sandwichartigem Aufbau eine Wärmeisolierung bilden. Die obere die Schneidfläche der Schneidplatte bildende Keramikschicht ist aufgrund ihrer Sprödigkeit bruchgefährdet, da Wärmespannungen, verursacht durch den Kühleffekt des Granulierwassers bzw. durch die über die Düsen erfolgende Wärmezufuhr, nicht aufgefangen werden. Dies führt auch hier zu Dehnungsrissen in der Schneidfläche.

Der Erfindung liegt die Aufgabe zugrunde, ein Verfahren zur Herstellung einer Düsenplatte mit einer fugenlosen und von der Auswirkung schädlicher Wärmespannungen befreiter Schneidplatte sowie eine hiernach hergestellte Düsenplatte anzugeben.

Diese Aufgabe ist nach den Merkmalen des Anspruches 1 gelöst.

Die nickelhaltige Zwischenschicht ermöglicht dank einer hohen Bruchdehnung von Σ > 30 % als Pufferschicht einen Ausgleich zwischen dem Grundkörper und der Schneidplatte der Düsenplatte sich ergebender Wärmespannungen. Da die aufgrund der zwischen dem temperierten Grundkörper und der gekühlten Schneidplatte auftretenden unterschiedlichen Längenausdehnungen voll von der Zwischenschicht aufgenommen werden, kann die Schneidplatte stirnseitig fugenlos als Vollfläche ausgebildet werden.

Durch die an sich bekannte heißisostatische Preßtechnik wird darüber hinaus eine im Betriebszustand latent in der Schneidplatte herrschende Druckspannung iniziiert, die unter Betriebsbedingungen existent bleibt. Da diese Druckspannung beim Abkühlungsprozeß nach dem heißisostatischen Preßvorgang von ca. 1300 °C auf Raumtemperatur hierin eingelagert bleibt, treten im Betriebszustand keine Zugspannungen auf, wodurch jegliche Bruchgefahr der spröden, hochkarbidhaltigen Schneidplatte verhindert wird.

Wenn die Zwischenschicht aus einem hochnickelhaltigen Metallpulvergemisch besteht, ist ein hoher Wärmeausdehnungskoeffizient von ca. 14x10 ⁻ ⁶ m/m°K bei 300 °C ermöglicht, so daß noch verbleibende geringe Restspannungen aufgrund der niedrigen Streckgrenze leicht aufgenommen werden. Eine hochnickelhaltige Zwischenschicht bietet in besonderen Anwendungsfällen den Vorteil einer sehr guten Wärmeverteilung, insbesondere wenn es darauf ankommt, auch bei hochviskosen Kunststoffschmelzen noch einen gleichmäßigen Schmelzefluß zu erreichen.

Besteht die Zwischenschicht nach einer weiteren vorteilhaften Ausgestaltung der Erfindung aus einer austenitischen Legierung, können wegen ihres hohen Ausdehnungskoeffizienten bei 300 °C von bis zu 18.10 ⁻ ⁶ m/m°K in verstärktem Maße latent wirksame Druckspannungen durch das heißisostatische Preßverfahren eingearbeitet werden, mit der Folge, daß Zugspannungen, hervorgerufen durch Wärmedehnungen, im Betriebszustand überhaupt nicht auftreten. Dies reduziert jegliche Bruchgefahr der an sich spröden, hochkarbidhaltigen Schneidplatte, die praktisch keine Zugspannungen übertragen kann.

Bei einer Kombination von mehreren Schichten in einer Ausgestaltung der Erfindung nach den Ansprüchen 4 bis 7 werden neben den Vorteilen eines wirksamen Spannungsausgleiches zwischen der Schneidplatte und der Grundplatte neben einer Wärmeverteilung noch die Vorteile einer Wärmedämmung erreicht.

Hierfür haben sich in besonderem Maße als wärmedämmende Pufferschicht austenitische Legierungen wie auch Titanlegierungen als besonders geeignet erwiesen.

Eine Einbettung der Titanlegierung zwischen den Schichten hochnickelhaltiger Legierungen verbindet die Vorteile einer hohen Eigenstabilität mit einer besonders guten Wärmeverteilung im Bereich der Düsen. Außerdem werden verstärkt unterschiedliche Wärmedehnungen durch die in einer Kombination vorhandenen Schichten aufgenommen.

In der Zeichnung sind zur Erläuterung der Erfindung Ausführungsbeispiele näher gezeigt und nachstehend beschrieben. Hierin zeigt
- Fig. 1: den Ausschnitt einer Düsenplatte in Stirnansicht,
- Fig. 2: die Düsenplatte nach Fig. 1 in einem Teilschnitt,
- Fig. 3: einen Teilschnitt aus Fig. 2 in vergrößerter Darstellung,
- Fig. 4 u. Fig. 5: eine weitere Ausbildung nach der Erfindung, ebenfalls in vergrößerter Darstellung.

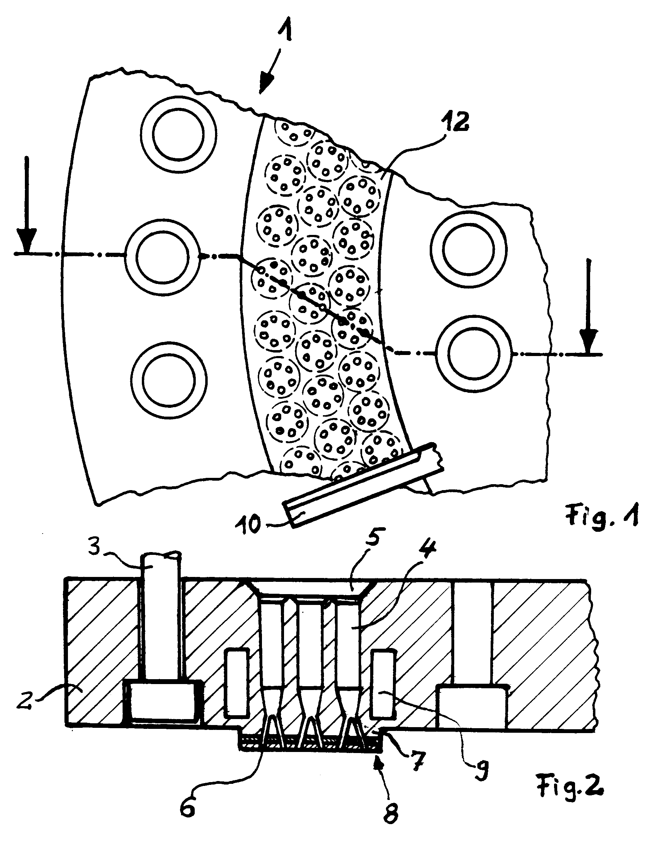

Wie in der Fig. 1 und der Fig. 2 dargestellt ist, besteht die Düsenplatte (1) für die Unterwasser-Granulierung thermoplastischer Kunststoffe aus einem Grundkörper (2), der mittels einer Schraubverbindung (3) mit dem Austrittsende eines nicht näher dargestellten Extruders, in welchem die Aufbereitung einer Kunststoffschmelze erfolgt, fest verbunden ist.

Die Düsenplatte (1) ist aus einem korrosionsfesten Grundwerkstoff, beispielsweise aus Chromstahl, gebildet, mit im Volumenprozent ca. 13 % Cr, der zerspanend bearbeitbar ist. Hierin sind mit über einen ringförmigen Einlaufkanal (5) und Zulaufbohrungen (4) verbundene Düsen (6) angeordnet, die in einer ringförmigen Erhebung (7) des Grundkörpers austreten. Hierbei können die Düsen (6), wie gezeigt, kreisförmig angeordnet sein, jede andere Anordnung ist ebenfalls denkbar. Heizungskanäle (9), die mit einem Wärmeträger, wie z.B. Wasserdampf, beschickt werden, beheizen die Zulaufbohrungen (4), insbesondere deren Übergangsbereich zu den Düsen (6). Die von Schneidmessern (10) einer nicht näher dargestellten Schneideinheit unter leichtem Anpreßdruck überstrichene Schneidfläche (8) hingegen wird durch das Umgebungswasser gekühlt. Die aus den Düsen (6) austretenden Kunststoffstränge werden von den Schneidmessern (10) im Umgebungswasser abgeschlagen.

Um bei dem an der Schneidfläche (8) der Schneidplatte (12) wirksamen Anpreßdruck der Schneidmesser (10) mit hoher Standzeit der Schneidplatte (12) granulieren zu können, ist diese weitgehend aus karbidhaltigem Hartstoff gebildet.

Nachteilig bei solchen Hartstoff-Legierungen ist der relativ geringe Wärmeausdehnungskoeffizient gegenüber Eisenbasis-Legierungen, aus welchem der Grundkörper (2) der Düsenplatte (1) hergestellt ist.

Um den hieraus nachteiligen Folgen zu begegnen, ist, wie in Fig. 3 näher gezeigt, zwischen dem Grundkörper (2) und der Schneidplatte (12) eine Zwischenschicht (13), bestehend aus einem nickelhaltigen Metallpulvergemisch, eingearbeitet. Die Einarbeitung erfolgt durch heißisostatisches Pressen unter Druck und erhöhter Temperatur, wodurch das entstehende isotrope Gefüge des Metallpulvergemisches der Zwischenschicht (13) durch Diffusionsschweißen mit der Schneidplatte (12) und dem Grundkörper (2) verbunden wird.

Das heißisostatische Preßverfahren ist an sich bekannt. Es wurde überraschend gefunden, daß durch dessen Anwendung bei Einsatz einer nickelhaltigen, relativ dünnen Zwischenschicht eine duktile Pufferschicht zwischen Grundkörper (2) und Schneidplatte (12) geschaffen wird, die einen hervorragenden Ausgleich unterschiedlicher Wärmedehnungen zwischen dem Grundkörper (2) und der Düsenplatte (12) ermöglicht.

Das Metallpulvergemisch ist vorzugsweise in Gewichtsprozenten wie folgt zusammengesetzt:
98,62 Ni, 0,02 C, 0,35 Mn, 0,40 Fe, 0,01 S, 0,35 Si, 0,25 Cu.

Die Schneidplatte (12) besteht vorzugsweise aus einem Hartstoff mit einem Titankarbidgehalt zwischen 25 und 35 Gewichtsprozent in korrosionsfester Bindephase, wie dieser z.B. unter der Bezeichnung Nicro 128 der Fa. Thyssen handelsüblich ist.

Besteht die Zwischenschicht (13) aus einer Legierung mit sehr hohem Nickelanteil, d.h. in Gewichtsprozenten mit mehr als 90 % Nickel, wird durch die hohe Wärmeleitfähigkeit der Zwischenschicht (13) im Bedarfsfalle überwiegend eine optimale Wärmeverteilung von den Heizkanälen (9) zu den Düsen (6) ermöglicht, so daß insgesamt ein gleichmäßiger Kunststoffschmelzfluß in den Düsen (6) erreicht ist.

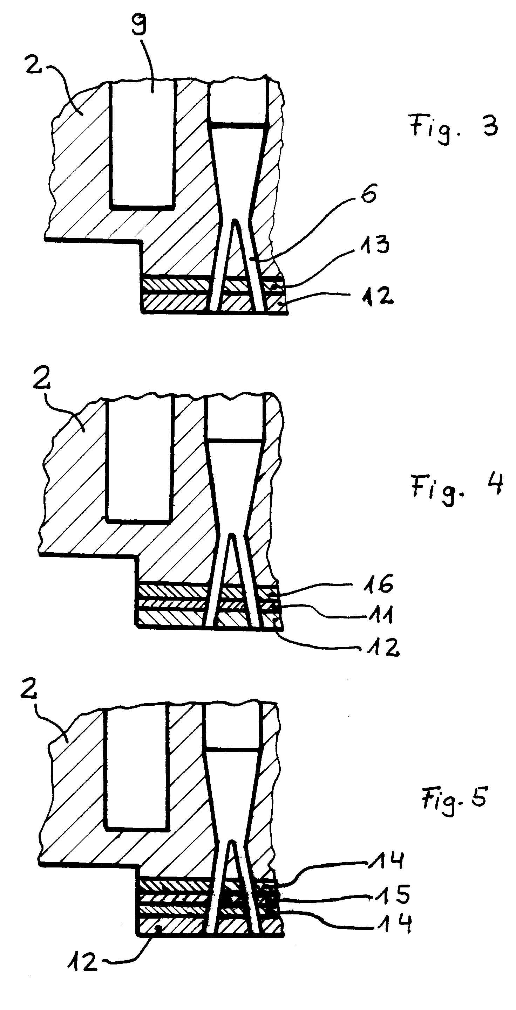

Einen Aufbau der Zwischenschicht (13) aus zwei Schichten zeigt die Fig. 4. nach welcher der Grundkörper (2) mit einer austenitischen Legierung (16) verbunden ist, deren Nickelanteil zwischen 8 und 15 Gewichtsprozent beträgt, während die Schneidplatte (12) mit einer hochnickelhaltigen Legierung (11) verbunden ist. Hierbei reduziert die austenitische Legierung (16) Wärmeverluste der Düsenplatte (1) an das Granulierwasser, während die hochnickelhaltige Legierung (11) wiederum eine gleichmäßige Wärmeverteilung zwischen den Düsen (6) ermöglicht.

Weiterhin kann die Zwischenschicht (13), wie in Fig. 5 gezeigt ist, vorteilhaft auch aus 3 Einzelschichten von Metallpulvergemischen aufgebaut sein. Dabei schließen zwei hochnickelhaltige Legierungen (14) eine Titanlegierung (15) ein.

Die hochnickelhaltige Legierung (14) ist in den in Fig. 4 und Fig. 5 gezeigten Beispielen jeweils mit einem Nickelanteil von mehr als 90 Gewichtsprozenten aufgebaut.

Die hohe Isolationsfähigkeit der Titanlegierung (15) mit in Gewichtsprozent 90 % Titan zwischen den aus jeweils einer hochnickelhaltigen Legierung (14) gebildeten Schichten dient insbesondere einer Wärmedämmung der Düsenplatte (1).

Ihre in nachteiliger Weise geringe Bruchdehnung ist unschädlich, da sie zwischen zwei duktilen Pufferschichten hoher Bruchdehnung eingebettet ist.

Die vorgeschlagene Vorgehensweise ermöglicht insgesamt eine als Vollfläche ausgebildete Schneidfläche (8) der Schneidplatte (12), mit den Vorteilen hoher Eigenstabilität und hervorragender Wärmeverteilung im Düsenbereich, da kein unterschiedlicher Verschleiß an der Schneidfläche auftritt.

## Patentansprüche

1. Verfahren zur Herstellung einer Düsenplatte mit zwischen einem Grundkörper (2) und einer ringförmigen Schneidplatte (12) eingelagerter Zwischenschicht (13) im Bereich der Düsen (6) zur Granulierung thermoplastischer Kunststoffe unter Wasser, dadurch gekennzeichnet, daß die zumindest eine Zwischenschicht (13) aus einem nickelhaltigen Metallpulvergemisch besteht und zum Ausgleich auftretender Wärmespannungen eine Schichtdicke von 0,5 bis 2 mm bildet, und daß die Zwischenschicht (13) unter Anwendung der heißisostatischen Preßtechnik verdichtet und durch Diffusionsschweißen mit dem Grundkörper (2) und der unter Einschluß der Düsen (6) vollflächig aus einer Hartstoff-Legierung gebildeten, vor Verschleiß geschützten Schneidplatte (12) verbunden wird.

2. Verfahren nach Anspruch 1, dadurch gekennzeichnet, daß die Zwischenschicht (13) einen Nickelanteil in Gewichtsprozenten von ≧ 90 % aufweist.

3. Verfahren nach Anspruch 1, dadurch gekennzeichnet, daß die Zwischenschicht (13) durch eine austenitische Legierung mit einem Nickelanteil in Gewichtsprozenten von 8-15 % gebildet ist.

4. Verfahren nach Anspruch 1, dadurch gekennzeichnet, daß die Zwischenschicht (13) aus zwei Schichten nickelhaltiger Metallpulvergemische gebildet ist, wobei der Grundkörper (2) mit einer austenitischen Legierung (16) und die Schneidplatte (12) mit einer hochnickelhaltigen Legierung (11) mit einem Nickelanteil in Gewichtsprozenten ≧ 90 % verbunden wird.

5. Verfahren nach Anspruch 4, dadurch gekennzeichnet, daß die Schichtstärke jeder Schicht 0,5 bis 2 mm beträgt.

6. Verfahren nach Anspruch 1, dadurch gekennzeichnet, daß die Zwischenschicht (13) aus drei Schichten gebildet ist, wobei der Grundkörper (2) und die Schneidplatte (12) jeweils mit einer hochnickelhaltigen Legierunsschicht (14) eines Nickelanteiles in Gewichtsprozenten ≧ 90 % verbunden sind, und beide Schichten eine weitere aus einem titanhaltigen Metallpulvergemisch gebildete Schicht (15) einschließen, deren Titananteil in Gewichtsprozenten ≧ 90 % ist.

7. Verfahren nach Anspruch 6, dadurch gekennzeichnet, daß die Schichtstärke jeder Schicht 0,5 bis 2 mm beträgt.

8. Düsenplatte zur Granulierung von aus Düsen (6) unter Wasser austretenden thermoplastischen Kunststoffsträngen mit einem Grundkörper (2) und einer ringförmigen, von Schneidmessern überstrichenen Schneidplatte (12) hergestellt, nach einem Verfahren der vorstehenden Ansprüche.
